(19) Europäisches Patentamt
European Patent Office
Office européen des brevets

(11) EP 4 269 470 A1

(12) EUROPEAN PATENT APPLICATION
published in accordance with Art. 153(4) EPC

(43) Date of publication:
01.11.2023 Bulletin 2023/44

(21) Application number: 21910669.7

(22) Date of filing: 20.12.2021

(51) International Patent Classification (IPC):
*C08G 75/23 (2006.01)* *B01D 71/68 (2006.01)*
*B01D 71/82 (2006.01)* *C08G 65/48 (2006.01)*
*C08L 81/06 (2006.01)*

(52) Cooperative Patent Classification (CPC):
B01D 71/68; B01D 71/82; C08G 65/48;
C08G 75/23; C08L 81/06

(86) International application number:
PCT/JP2021/046908

(87) International publication number:
WO 2022/138524 (30.06.2022 Gazette 2022/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.12.2020 JP 2020213943

(71) Applicant: SUMITOMO CHEMICAL COMPANY, LIMITED
Tokyo 103-6020 (JP)

(72) Inventors:
- SUMI, Yurika
Tsukuba-shi, Ibaraki 300-3294 (JP)
- ITO, Kazuyuki
Tsukuba-shi, Ibaraki 300-3294 (JP)

(74) Representative: Vossius & Partner
Patentanwälte Rechtsanwälte mbB
Siebertstraße 3
81675 München (DE)

# (54) AROMATIC POLYSULFONE, RESIN COMPOSITION, AND METHOD FOR PRODUCING AROMATIC POLYSULFONE

(57) An aromatic polysulfone having one or more functional groups selected from the group consisting of an acidic group having a pKa equal to or smaller than a pKa of a carboxy group and a salt of the acidic group at a main chain terminal, in which the amount of the functional group, calculated from a peak area ratio in $^1$H-NMR, is 0.35 to 40 per 100 units of repeating units forming the main chain of the aromatic polysulfone.

EP 4 269 470 A1

## Description

[Technical Field]

The present invention relates to an aromatic polysulfone, a resin composition, and a method for producing an aromatic polysulfone.

Priority is claimed on Japanese Patent Application No. 2020-213943, filed on December 23, 2020, the content of which is incorporated herein by reference.

[Background Art]

Aromatic polysulfones have excellent heat resistance, mechanical characteristics, electrical characteristics, hot water resistance, and the like. Therefore, aromatic polysulfones are used in various applications such as electrical and electronic fields, mechanical fields, automobile fields, aviation fields, and medical food industry fields.

In addition, depending on the application thereof, a hydrophilized aromatic polysulfone is required.

Specific examples of the hydrophilized aromatic polysulfone include aromatic polysulfone having a polar group.

Patent Document 1 discloses an internal pressure type hollow fiber type NF film using a sulfonated polyethersulfone.

Patent Document 1 discloses an internal pressure type hollow fiber type NF film formed of a mixture containing a sulfonated polyethersulfone and a polyethersulfone, in which the content proportion in the total amount of the sulfonated polyethersulfone and the polyethersulfone is 20% to 50% by mass of sulfonated polyethersulfone, 80% to 50% by mass of polyethersulfone, and the sulfonated degree of sulfonated polyethersulfone is 0.10 to 0.18.

[Citation List]

[Patent Document]

[Patent Document 1]
Japanese Unexamined Patent Application, First Publication No. 2013-215640

[Summary of Invention]

[Technical Problem]

When an aromatic polysulfone is used as a material for forming a separation film, a separation film formed of the aromatic polysulfone is required to have higher water permeability and high mechanical strength.

The present invention has been made in view of the above circumstances and an object of the present invention is to provide an aromatic polysulfone useful as a material for forming a separation film, a resin composition containing the aromatic polysulfone, and a method for producing the aromatic polysulfone.

[Solution to Problem]

As a result of intensive studies to solve the above-described problems, the present inventors found that a useful aromatic polysulfone can be obtained as a material for forming a separation film by introducing one or more functional groups selected from the group consisting of an acidic group having a specific acidity and a salt of the acidic group to a main chain terminal of the aromatic polysulfone, and setting the amount of a functional group in a specific range, thereby completing the present invention.

That is, the present invention has the following aspects.

[1] An aromatic polysulfone having, at a main chain terminal, one or more functional groups selected from the group consisting of an acidic group having a pKa equal to or smaller than a pKa of a carboxy group and a salt of the acidic group, in which the amount of the functional group, calculated from a peak area ratio of $^1$H-NMR, is 0.35 to 40 per 100 units of repeating units forming the main chain of the aromatic polysulfone.

[2] The aromatic polysulfone according to [1],
in which the aromatic polysulfone has a repeating unit including a structure represented by General Formula (S-1) and a terminal unit represented by General Formula (Se-1).

$$-ph^1-SO_2-ph^2-O- \ldots \qquad (S-1)$$

$-ph^1-SO_2-ph^2-O-Ar-Ra...$ (Se-1)

[In the formulae, $ph^1$ and $ph^2$ are each independently a phenylene group which may have a substituent. Ar is an aromatic hydrocarbon group which may have a substituent. Ra is one or more functional groups selected from the group consisting of an acidic group having a pKa equal to or smaller than a pKa of the carboxy group and a salt of the acidic group.]

[3] The aromatic polysulfone according to [1] or [2], in which the amount of the functional group is 0.7 to 40 per 100 units of the repeating units.

[4] The aromatic polysulfone according to any one of [1] to [3],
in which the aromatic polysulfone is a mixed resin of an aromatic polysulfone having the functional group at the main chain terminal and an aromatic polysulfone not having the functional group at a main chain terminal.

[5] A resin composition containing:

the aromatic polysulfone according to any one of [1] to [4]; and
a filler.

[6] A method for producing the aromatic polysulfone according to any one of [1] to [3], including:
a step of reacting an aromatic polysulfone precursor having a halogen atom at a main chain terminal with a compound having the functional group to generate the aromatic polysulfone having the functional group at the main chain terminal.

[Advantageous Effects of Invention]

According to the present invention, it is possible to provide an aromatic polysulfone useful as a material for forming a separation film, a resin composition containing the aromatic polysulfone, and a method for producing the aromatic polysulfone.

[Description of Embodiments]

(Aromatic polysulfone)

The aromatic polysulfone of the present embodiment has, at a main chain terminal, one or more functional groups (hereinafter, also referred to as FG) selected from the group consisting of an acidic group having a pKa equal to or smaller than a pKa of the carboxy group and a salt of the acidic group, in which the amount of the functional group, calculated from a peak area ratio in $^1$H-NMR, is 0.35 to 40 per 100 units of repeating units forming the main chain of the aromatic polysulfone.

The aromatic polysulfone of the present embodiment is typically a resin repeating unit including a divalent aromatic group (residue formed by removing two hydrogen atoms bound to an aromatic ring thereof, from an aromatic compound), a sulfonyl group ($-SO_2-$), and an oxygen atom (-O-), and has the FG at the main chain terminal. In addition, the divalent aromatic group may have a substituent, and typical examples of the substituent include an alkyl group or an aryl group.

It is preferable that the aromatic polysulfone of the present embodiment have a repeating unit including a structure represented by Formula (S-1).

$-ph^1-SO_2-ph^2-O- ...$ (S-1)

[In the formula, $ph^1$ and $ph^2$ are each independently a phenylene group which may have a substituent.]

The phenylene group for $ph^1$ and $ph^2$ may be a p-phenylene group, an m-phenylene group, or an o-phenylene group, and is preferably a p-phenylene group.

Examples of the substituent which the phenylene group may have include an alkyl group an aryl group, and the like.

The alkyl group is preferably an alkyl group having 1 to 10 carbon atoms, and specific examples thereof suitably include a methyl group, an ethyl group, an n-propyl group, an isopropyl group, an n-butyl group, an isobutyl group, a s-butyl group, a t-butyl group, an n-hexyl group, a 2-ethylhexyl group, an n-octyl group, an n-decyl group, and the like.

The aryl group is preferably an aryl group having 6 to 20 carbon atoms, and specific examples thereof suitably include a phenyl group, an o-tolyl group, an m-tolyl group, a p-tolyl group, a 1-naphthyl group, a 2-naphthyl group, and the like.

The aromatic polysulfone of the present embodiment may include a repeating unit including a structure represented by Formula (S-2) and Formula (S-3), in addition to the structure represented by Formula (S-1).

$$-ph^3\text{-}R\text{-}ph^4\text{-}O\text{-} \ldots \qquad (S\text{-}2)$$

$$-(ph^5)_n\text{-}O\text{-} \ldots \qquad (S\text{-}3)$$

[In Formula (S-2), $ph^3$ and $ph^4$ are each independently a phenylene group which may have a substituent. R represents an alkylidene group, an oxygen atom, or a sulfur atom.

In Formula (S-3), $ph^5$ is a phenylene group which may have a substituent. n represents an integer of 1 to 3. n is 2 or more, a plurality of $Ph^5$'s may be the same or different.]

$ph^3$, $ph^4$, and $ph^3$ are each exemplary examples of the phenylene group which may have a substituent at $ph^1$ and $ph^2$ in Formula (S-1).

As the alkylidene group, an alkylidene group having 1 to 5 carbon atoms is preferable, and examples thereof include a methylene group, an ethylidene group, an isopropylidene group, a 1-butylidene group, and the like.

In Formula (S-3), n is preferably 1 or 2.

The aromatic polysulfone of the present embodiment has one or more functional groups selected from the group consisting of an acidic group having a pKa equal to or smaller than a pKa of the carboxy group and a salt of the acidic group at the main chain terminal.

In the present specification, based on a compound having a carboxy group, when the carboxy group of the compound is converted into the acidic group, the term "acidic group having a pKa equal to or smaller than a pKa of the carboxy group" is an acidic group having a characteristic in which the pKa of the compound having an acidic group is equal to or smaller than the pKa of the compound having a carboxy group.

For example, when the main chain terminal of the aromatic polysulfone of the present embodiment is a terminal structure derived from 4-hydroxybenzoic acid, the "acidic group having a pKa equal to or smaller than a pKa of the carboxy group" is defined as follows. The acidic group has a characteristic that the pKa of an aqueous solution at 25°C of a compound obtained by converting the carboxy group of 4-hydroxybenzoic acid to the acidic group is equal to or smaller than the pKa of the carboxy group of 4-hydroxybenzoic acid. That is, the acidic group has a characteristic that the pKa of the compound having the acidic group is 4.47 or less.

Specific examples of the "acidic group having a pKa equal to or smaller than a pKa of the carboxy group" in the aromatic polysulfone of the present embodiment include a carboxy group (-COOH), a sulfonic acid group ($-SO_2OH$), a sulfinic acid group ($-SO_2H$), a phosphate group ($H_2PO_4$-), and the like.

In addition, in the present specification, examples of a "salt of the acidic group (a salt of an acidic group having a pKa equal to or smaller than a pKa of the carboxy group)" include a group consisting of the acidic group described above and a salt of an inorganic base or an organic base. Specifically, the above-described group is obtained by substituting a cation of hydrogen of the acidic group with a cation of another atom or a molecule having a cation.

Examples of the salt of the acidic group and the inorganic base include alkali metal salt such as a sodium salt and a potassium salt, an ammonium salt, and the like.

Examples of the salt of the acidic group and the organic base include an imidazolium salt, a pyridinium salt, and the like.

Examples of the imidazolium salt include N,N'-dialkyl imidazolium salt such as 1-methyl imidazolium salt, 1-ethyl-3-methyl imidazolium salt, 1-propyl-3-methyl imidazolium salt, 1-methyl-3-octyl imidazolium salt, 1-decyl-3-methyl imidazolium salt, 1-dodecyl-3-methyl imidazolium salt, 1-methyl-3-dodecyl imidazolium salt, 1-tetradecyl-3-methyl imidazolium salt, 1-methyl-3-tetradecyl imidazolium salt, 1-hexadecyl-3-methyl imidazolium salt, 1-hexadecyl-4-methyl imidazolium salt, 1-methyl-3-hexadecyl imidazolium salt, and 1-dodecyl-2-methyl-3-benzyl imidazolium salt.

Examples of the pyridinium salt include N-alkyl pyridinium salt such as 1-methyl pyridinium salt, 1-butyl-4-methyl pyridinium salt, 1-lauryl pyridinium salt, 1-tetradecyl pyridinium salt, 1-hexadecyl pyridinium salt, 1-tetradecyl-4-methyl pyridinium salt, and 1-hexadecyl-4-methyl pyridinium salt.

As the "salt of the acidic group" in the aromatic polysulfone of the present embodiment, a carboxy group (-COOH), a sulfonic acid group ($-SO_2OH$), a sulfinic acid group ($-SO_2H$), or a group consisting of an alkali metal salt of a phosphate group ($H_2PO_4$-), an imidazolium salt, or a pyridinium salt is preferable, a group consisting of a sulfonic acid group ($-SO_2OH$), a sulfonic acid group ($-SO_2H$), or an alkali metal salt of a phosphate group ($H_2PO_4$-) is more preferable, and a group consisting of an alkali metal salt of a sulfinic acid group ($-SO_2OH$) is further more preferable. A sodium sulfonate group ($-SO_2ONa$) or a potassium sulfonate group ($-SO_2OK$) is suitable.

As FG in the aromatic polysulfone of the present embodiment, a group represented by any of Formulae (Ra-1) to (Ra-4) is preferable, and a group represented by Formula (Ra-1) is preferable.

[Chem. 1]

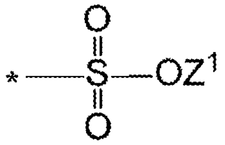
(Ra-1)

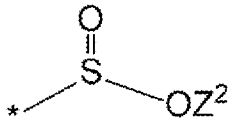
(Ra-2)

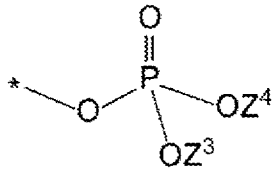
(Ra-3)

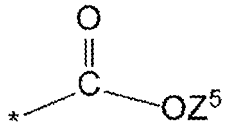
(Ra-4)

[In Formulae (Ra-1) to (Ra-4), $Z^1$ to $Z^5$ are each independently a hydrogen atom, an alkali metal atom, an imidazole group, or a pyridine group. * indicates a bonding site].

In Formulae (Ra-1) to (Ra-4), as the alkali metal atom in $Z^1$ to $Z^5$, a sodium atom or a potassium atom is preferable.

In Formulae (Ra-1) to (Ra-4), the imidazole group in $Z^1$ to $Z^5$ is a group obtained by removing one hydrogen atom from the imidazole compound. Specific examples of the imidazole compound include N,N'-dialkyl imidazole such as 1-methyl-3-octyl imidazole, 1-decyl-3-methyl imidazole, 1-dodecyl-3-methyl imidazole, 1-methyl-3-dodecyl imidazole, 1-tetradecyl-3-methyl imidazole, 1-methyl-3-tetradecyl imidazole, 1-hexadecyl-3-methyl imidazole, 1-hexadecyl-4-methyl imidazole, 1-methyl-3-hexadecyl imidazole, and 1-dodecyl-2-methyl-3-benzyl imidazole.

In Formulae (Ra-1) to (Ra-4), the pyridine group in $Z^1$ to $Z^5$ is a group obtained by removing one hydrogen atom from the pyridine compound. Specific examples of the pyridine compound include N-alkyl pyridines such as 1-lauryl pyridine, 1-tetradecyl pyridine, 1-hexadecyl pyridine, 1-tetradecyl-4-methyl pyridine, and 1-hexadecyl-4-methyl pyridine.

In Formulae (Ra-1) to (Ra-4), $Z^1$ to $Z^5$ are each independently preferably a hydrogen atom or an alkali metal atom, and more preferably a hydrogen atom, a sodium atom, or a potassium atom, and further more preferably a sodium atom.

The aromatic polysulfone of the present embodiment may have one type of FG alone, may have two or more types of FG, may have any one of an acidic group having a pKa equal to or smaller than a pKa of the carboxy group and a salt of the acidic group, or may have only one of any of the acidic group or a salt of the acidic group.

It is more preferable that the aromatic polysulfone of the present embodiment have a repeating unit including a structure represented by Formula (S-1), and the main chain terminal of the aromatic polysulfone be a terminal unit represented by Formula (Se-1).

$$-ph^1-SO_2-ph^2-O-Ar-Ra... \qquad (Se-1)$$

[In the formulae, $ph^1$ and $ph^2$ are each independently a phenylene group which may have a substituent. Ar is an aromatic hydrocarbon group which may have a substituent. Ra is one or more functional groups selected from the group consisting of an acidic group having a pKa equal to or smaller than a pKa of the carboxy group and a salt of the acidic group.]

In Formula (Se-1), $ph^1$ and $ph^2$ are each independently the same as the phenylene group which may have a substituent at $ph^1$ and $ph^2$ in Formula (S-1).

In Formula (Se-1), the aromatic hydrocarbon group for Ar is a hydrocarbon group having at least one aromatic ring. The aromatic ring is not limited as long as the aromatic ring is a cyclic conjugated system having $4n + 2\ \pi$ electrons, may be monocyclic or polycyclic, and may be an aromatic heterocyclic ring in which some of the carbon atoms constituting the ring are substituted with heteroatoms.

Examples of the aromatic ring in the aromatic hydrocarbon group include a benzene ring, a naphthalene ring, an anthracene ring, and a phenanthrene ring, and among these, a benzene ring is preferable. That is, the aromatic hydrocarbon group for Ar is preferably a phenylene group.

Ra in Formula (Se-1) is one or more functional groups selected from the group consisting of an acidic group having a pKa equal to or smaller than a pKa of the carboxy group and a salt of the acidic group, and the details are as described above.

In Formula (Se-1), Ra bound to Ar may be one type alone, or may be two or more types. In addition, the binding position of Ra bound to Ar is not particularly limited, but, for example, when Ar is a phenylene group, the binding position of the phenylene group with an oxygen atom is set as a l-position, and Ra is preferably provided at a 3-position or 4-position.

It is more preferable that the aromatic polysulfone of the present embodiment be an aromatic polysulfone S1 (hereinafter, referred to as "aromatic polysulfone S1") having a repeating unit represented by Formula (S-1-1) and a terminal unit represented by Formula (Se-1-1).

[Chem. 2]

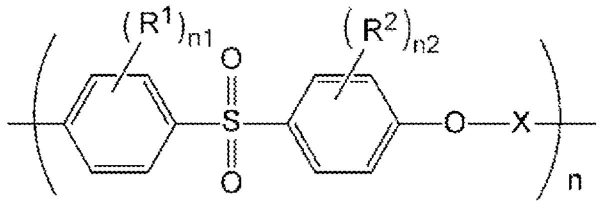

・・・(S-1-1)

[In the formula, $R^1$ and $R^2$ are each independently an alkyl group having 1 to 10 carbon atoms or an aryl group having 6 to 20 carbon atoms, n1 and n2 are each independently an integer of 0 to 4, and when n1 or n2 is 2 or more, a plurality of $R^1$ and $R^2$ may be the same as or different. X is a single bond or a group derived from bisphenol or biphenol, n represents an integer of 1 or more.]

[Chem. 3]

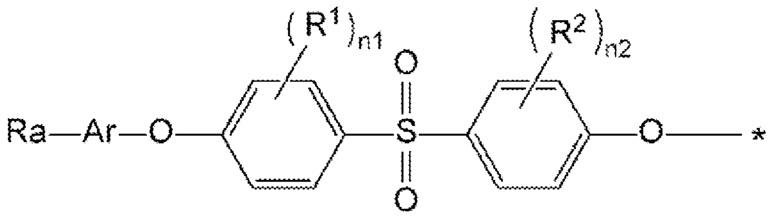

・・・(Se-1-1)

[In the formula, Ra is one or more functional groups selected from the group consisting of an acidic group having a pKa equal to or smaller than a pKa of the carboxy group and a salt of the acidic group. Ar is an aromatic hydrocarbon group which may have a substituent. $R^1$ and $R^2$ each independently represents an alkyl group having 1 to 10 carbon atoms or an aryl group having 6 to 20 carbon atoms, n1 and n2 are each independently an integer of 0 to 4, and when n1 or n2 is 2 or more, a plurality of $R^1$ and $R^2$ may be the same as or different. * indicates a bonding site].

Examples of both of the alkyl groups having 1 to 10 carbon atoms and the aryl groups having 6 to 20 carbon atoms in $R^1$ and $R^2$ in Formulae (S-1-1) and (Se-1-1) are the same as those exemplified as the substituent which the phenylene group may have in $ph^1$ and $ph^2$ in Formula (S-1).

In Formulas (S-1-1) and (Se-1-1), n 1 and n2 are each independently preferably 0 to 2, more preferably 0 to 1, and further more preferably 0.

Specifically, the group derived from bisphenol is a divalent g roup obtained by removing one hydroxy group and a hydrogen atom of one hydroxy group from the two hydroxy groups of bisphenol. Specific examples include a group derived from each of bisphenol A: (2,2-bis (4-hydroxyphenyl)propane), and bisphenol AF: 2,2-bis (4-hydroxyphenyl)hexafluoropropane, bis(4-hydroxyphenyl) sulfide, bis(4-hydroxy-3-methylphenyl)sulfide, and bis(4-hydroxyphenyl)ether, and among these, a group derived from bisphenol A, that is, a divalent group obtained by removing one hydroxy group and a hydrogen atom of the other hydroxy group, out of two hydroxy groups of bisphenol A, is suitable.

Examples of the group derived from biphenol include a group derived from each of 4,4'-biphenol (4,4'-dihydroxybiphenyl), 2,2'-dihydroxybiphenyl, 3,5,3',5'-tetramethyl-4,4'-dihydroxybiphenyl, 2,2'-diphenyl-4,4'-dihydroxybiphenyl, and 4,4'-dihydroxy-p-quaterphenyl, and out of groups derived from 4,4'-biphenol, that is, two hydroxy groups of 4,4'-biphenol, a divalent group obtained by removing one hydroxy group and a hydrogen atom of one hydroxy group is suitable.

X is preferably a single bond.

n is preferably 5 to 600.

In Formula (Se-1-1), Ar is the same as Ar in Formula (Se-1).

In Formula (Se-1 -1), Ra is one or more functional groups selected from the group consisting of an acidic group having a pKa equal to or smaller than a pKa of the carboxy group and salt of the acidic group, and the details are as described above.

[Amount of FG]

The aromatic polysulfone of the present embodiment is an aromatic polysulfone having FG at a main chain terminal, and the amount of FG at the main chain terminal, calculated from a peak area ratio in $^1$H-NMR, is 0.35 to 40 per 100 units of repeating units forming a main chain of the aromatic polysulfone.

In the aromatic polysulfone of the present embodiment, the amount of FG at the main chain terminal, calculated from a peak area ratio in $^1$H-NMR, is 0.35 or more, preferably 0.5 or more, more preferably 0.65 or more, further more preferably 0.7 or more, particularly preferably 1.3 or more, and most preferably 1.5 or more, per 100 units of the repeating units forming the main chain of the aromatic polysulfone.

The amount of FG at the main chain terminal is 40 or less, preferably 10 or less, more preferably 7 or less, further more preferably 5 or less, particularly preferably 3 or less, and most preferably 2.5 or less, per 100 units of repeating units forming the main chain of the aromatic polysulfone.

In the aromatic polysulfone of the present embodiment, the amount of FG at the main chain terminal calculated from a peak area ratio in $^1$H-NMR is preferably 0.5 or more and 40 or less, more preferably 0.5 or more and 10 or less, further more preferably 0.7 or more and 10 or less, even more preferably 0.7 or more and 7 or less, even further more preferably 0.7 or more and 5 or less, particularly preferably 1.5 or more and 3 or less, and most preferably 1.3 or more and 2.5 or less, per 100 units of repeating units forming the main chain of the aromatic polysulfone. In addition, the amount may be 0.5 or more and 7 or less.

In the aromatic polysulfone of the present embodiment, when the amount of FG at the main chain terminal is 0.5 or more per 100 units of the repeating units forming the main chain of the aromatic polysulfone, water permeability of a separation film formed of the aromatic polysulfone is favorable. When FG is 0.65 or more, the water permeability of the separation film formed of the aromatic polysulfone is improved, and the fouling resistance is also improved. Here, fouling means an irreversible deterioration of the film performance, and, for example, means occurrence of blocking (clogging) of the separation film.

When the amount of FG at the main chain terminal is 40 or less, the mechanical strength of the separation film including a thin film (film) formed of the aromatic polysulfone is favorable.

The amount of FG at the main chain terminal is calculated by $^1$H-NMR measurement of the aromatic polysulfone. A specific calculation method is as follows.

(i) In the repeating unit of the main chain of the aromatic polysulfone, a peak area A assigned to the hydrogen atom bound to the aromatic ring of the main chain in which the number of hydrogen atoms is already known is obtained by $^1$H-NMR measurement.

(ii) By dividing the peak area A by the number of hydrogen atoms bound to the aromatic ring of the main chain, the number of repeating units (number of units) can be calculated (for example, when the peak area A is a peak area assigned to four hydrogen atoms bound to the aromatic ring of the main chain, the peak area A is divided by 4).

(iii) A peak area (B) assigned to a hydrogen atom bound to a carbon atom adjacent to the carbon atom to which FG binds in the aromatic ring at the main chain terminal of the aromatic polysulfone is obtained by $^1$H-NMR measurement.

(iv) By dividing the peak area B by the number of hydrogen atoms bound to the carbon atom adjacent to the carbon atom to which FG binds, the number of FG can be calculated (for example, when the peak area B is a peak area assigned to two hydrogen atoms bound to the carbon atom adjacent to the carbon atom to which FG binds, the peak area B is divided by 2).

(v) By dividing the number of FGs obtained in (iv) by the number of repeating units (number of units) obtained in (ii), and further multiplying thereof by 100 (100 units), the amount of FGs per 100 units of the repeating units forming the main chain of the aromatic polysulfone can be calculated.

As a measurement solvent in the $^1$H-NMR measurement, any solvent which enables $^1$H-NMR measurement and is capable of dissolving the aromatic polysulfone is sufficient, and heavy dimethyl sulfoxide is suitable.

As $^1$H-NMR measurement conditions of a case of using heavy dimethyl sulfoxide as a measurement solvent, the following conditions are exemplary examples.

[Solution $^1$H-NMR measurement condition]

Measuring device: ECZ400S (manufactured by JEOL)
Static magnetic field strength: 9.4 Tesla (resonance frequency: 400 MHz ($^1$H))
Spinning: 15 Hz
(Repeat time: 7.2 s)

Number of times of integration: 64 times
Temperature: Room temperature
Chemical shift standard substance: Dimethyl sulfoxide

A more specific method of calculating the amount of FG at a main chain terminal of an aromatic polysulfone of the present embodiment is as follows (Calculation Examples 1 to 3).

· Calculation Example 1 of FG amount at main chain terminal

When the main chain of the aromatic polysulfone of the present embodiment is constituted by a repeating unit represented by Formula (mc-1), and when the main chain terminal is a structure represented by Formula (e-1), the FG amount per 100 units of repeating units represented by Formula (mc-1) is calculated by the calculation method shown below. In the following formula, Xp is a peak area assigned to a hydrogen atom (Hx) in Formula (mc-1), and Yp is a peak area assigned to a hydrogen atom (Hy) in Formula (e-1).

Number of units n01 = Xp/4
FG number = Yp/2
FG amount = (Yp/2)/(Xp/4) $\times$ 100
= Yp/Xp $\times$ 200

[Chem. 4]

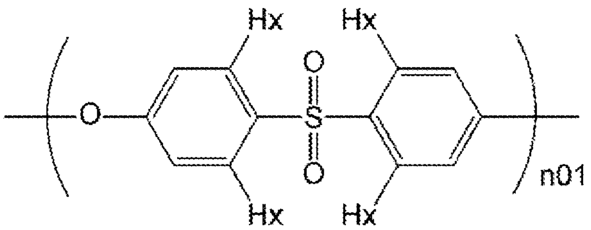

・・・(mc-1)

[Chem. 5]

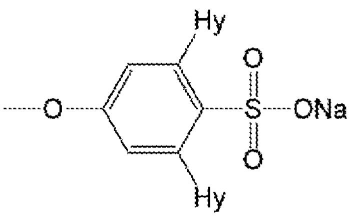

・・・(e-1)

. Calculation Example 2 of FG amount at main chain terminal

The main chain of the aromatic polysulfone of the present embodiment is constituted by repeating units represented by Formula (mc-1) and repeating units represented by Formula (mc-2), and when the main chain terminal is a structure represented by Formula (e-1), the FG amount per 100 units of repeating units represented by Formula (mc-1) and repeating units represented by Formula (mc-2) is calculated by the calculation method shown below. In the following formula, Xp is a peak area assigned to a hydrogen atom (Hx) in Formula (mc-1), Zp is a peak area assigned to a hydrogen atom (Hz) in Formula (mc-2), and Yp is a peak area assigned to a hydrogen atom (Hy) in Formula (e-1).

$$\text{Number of units n02 + n03} = Xp/4 + Zp/4$$

$$\text{FG number} = Yp/2$$

$$FG\ amount = (Yp/2)/(Xp/4 + Zp/4) \times 100$$

$$= Yp/(Xp + Zp) \times 200$$

[Chem. 6]

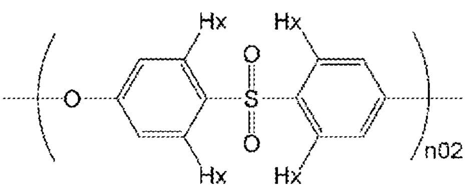

(mc-1)

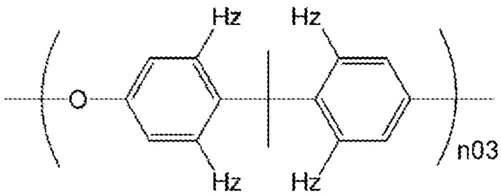

(mc-2)

[Chem. 7]

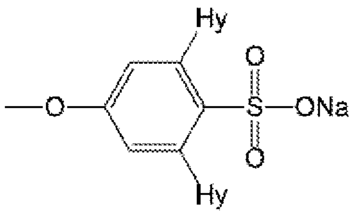

・・・(e-1)

. Calculation Example 3 of FG amount at main chain terminal

The main chain of the aromatic polysulfone of the present embodiment is constituted by a repeating unit represented by Formula (mc-3), and when the main chain terminal is a structure represented by Formula (e-1), the FG amount per 100 units of repeating units represented by Formula (mc-3) is calculated by the calculation method shown below. In the following formula, $CH_{3P}$ is a peak area assigned to a methyl group in Formula (mc-3), and Yp is a peak area assigned to a hydrogen atom (Hy) in Formula (e-1).

$$Number\ of\ units\ n04 = CH_3p/24$$

$$FG\ number = Yp/2$$

$$FG\ amount = (Yp/2)/(CH_3p/24) \times 100$$

$$= Yp/CH_3p \times 1200$$

[Chem. 8]

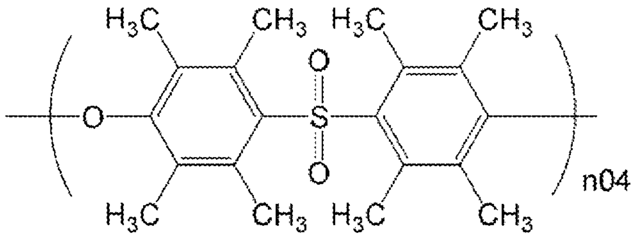

· · · (mc − 3)

[Chem. 9]

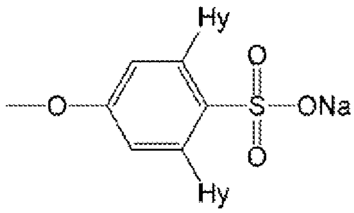

· · · (c − 1)

For example, when the aromatic polysulfone of the present embodiment is the above-mentioned aromatic polysulfone S1, the aromatic polysulfone is an aromatic polysulfone in which an Ra amount in Formula (Se-1-1), calculated from a peak area ratio in $^1$H-NMR, is 0.35 to 40 per 100 units of repeating units of the aromatic polysulfone S1.

The term "100 units of repeating units of the aromatic polysulfone S1" means 100 units of repeating units represented by Formula (S-1-1) when X in Formula (S-1-1) is a single bond. In addition, when X in Formula (S-1-1) is a group derived from bisphenol or biphenol, it means the 100 units of total repeating units including repeating units consisting of groups derived from bisphenol or biphenol, in addition to the repeating units represented by Formula (S-1-1) when X in Formula (S-1-1) is a single bond.

Ra in Formula (Se-1 -1) is preferably a group represented by any of General Formulae (Ra-1) to (Ra-4).

The aromatic polysulfone of the present embodiment may be one type of aromatic polysulfone alone, or may be two or more types of mixed resins.

In the case of two or more types of mixed resins, the aromatic polysulfone of the present embodiment may be two or more types of mixed resins of the aromatic polysulfone having FG at the main chain terminal, or may be a mixed resin of an aromatic polysulfone having FG at the main chain terminal (aromatic polysulfone P1) and an aromatic polysulfone not having FG at the main chain terminal (aromatic polysulfone P0).

In this case, in the mixed resin, the FG amount at the main chain terminal, calculated from the above-mentioned peak area ratio in $^1$H-NMR, is 0.35 to 40 per 100 units of repeating units forming the main chain of aromatic polysulfone.

The FG amount at the main chain terminal in the aromatic polysulfone of the present embodiment can be controlled by appropriately adjusting an addition amount of a compound having FG used in the method for producing an aromatic polysulfone of the present embodiment described below; an addition amount of a base used in the method for producing an aromatic polysulfone of the present embodiment described below; a mixing ratio of the aromatic polysulfone P1 and the aromatic polysulfone P0; and a degree of polymerization of the aromatic polysulfone.

From the viewpoint of further improving film characteristics (particularly, water permeability) of the separation film formed of the aromatic polysulfone, the aromatic polysulfone of the present embodiment is preferably a mixed resin of the aromatic polysulfone P1 and the aromatic polysulfone P0.

That is, the aromatic polysulfone of the present embodiment is preferably an aromatic polysulfone, in which in a mixed resin of the aromatic polysulfone P1 and the aromatic polysulfone P0, the FG amount at the main chain terminal, calculated from the peak area ratio in $^1$H-NMR, is 0.35 to 40 per 100 units of the repeating units forming the main chain of the aromatic polysulfones P1 and P0.

In addition, the aromatic polysulfone of the present embodiment is more preferably an aromatic polysulfone, in which in the mixed resin of the aromatic polysulfone having a repeating unit represented by General Formula (S-1-1) and a terminal unit represented by General Formula (Se-1-1) and the aromatic polysulfone having a repeating unit represented by General Formula (S-1-1) and not having FG at the main chain terminal (for example, aromatic polysulfone having a halogen atom at the main chain terminal), an Ra amount in Formula (Se-1-1), calculated from a peak area ratio in $^1$H-NMR, is 0.35 to 40 per 100 units of repeating units represented by General Formula (S-1-1).

The number-average molecular weight of the aromatic polysulfone of the present embodiment is preferably 1,000 to 150,000, more preferably 8,000 to 130,000, and further more preferably 10,000 to 70,000.

The number-average molecular weight (Mn) means a value that can be obtained by gel permeation chromatography (GPC) analysis, and obtained in terms of standard polystyrene based on a calibration curve obtained by measuring the molecular weight of standard polystyrene.

Since the aromatic polysulfone of the present embodiment has a specific amount of FG at the main chain terminal, it is possible to form a separation film having high water permeability and high mechanical strength from the aromatic polysulfone. It is assumed that this is because the FG is disposed on the surface of the separation film, hydrophilicity of the separation film is enhanced to improve water permeability, and the FG is contained only at the main chain terminal, and thus a solid structure can be maintained without weakening an interaction between the aromatic rings of the aromatic polysulfone.

In addition, by setting the FG amount at the main chain terminal of the aromatic polysulfone of the present embodiment to be 0.5 to 40, the separation film formed of the aromatic polysulfone also improves fouling resistance, in addition to the above effects.

Therefore, the aromatic polysulfone of the present embodiment is useful as a material for forming a separation film.

(Resin composition)

The resin composition of the present embodiment contains the above-mentioned aromatic polysulfone.

As the resin composition of the present embodiment, a resin composition containing the above-mentioned aromatic polysulfone and a filler is preferable.

<Filler>

Examples of the filler include a fibrous filler, a plate-shaped filler, a spherical filler, a powdery filler, a deformed filler, and the like.

Examples of the fibrous filler include a glass fiber, a PAN-based carbon fiber, a pitch-based carbon fiber, a silica-alumina fiber, a silica fiber, an alumina fiber, other ceramic fibers, a liquid crystal polymer (LCP) fiber, an aramid fiber, a polyethylene fiber, and the like. In addition, examples thereof also include whiskers such as wollastonite and potassium titanate fiber.

Examples of the plate-shaped filler include talc, mica, graphite, wollastonite, and the like.

The plate-shaped filler may be surface-treated, or may be untreated.

Examples of the mica include natural mica such as white mica, gold mica, fluorine gold mica, and tetrasilicon mica, and artificially produced synthetic mica.

Examples of the spherical filler include glass beads and glass balloons.

Examples of the powdery filler include calcium carbonate, dolomite, barium clay sulfate, titanium oxide, carbon black, conductive carbon, fine-grained silica, and the like.

Examples of the deformed filler include glass flakes and deformed glass fibers.

The content of the filler in the resin composition of the present embodiment is preferably 0 to 250 parts by mass, more preferably 0 to 70 parts by mass, further more preferably 0 to 50 parts by mass, and particularly preferably 0 to 25 parts by mass, with respect to 100 parts by mass of the aromatic polysulfone.

<Optional components>

The resin composition of the present embodiment may contain optional components other than the above-mentioned aromatic polysulfone and filler. Examples of the optional components include resins other than the above-mentioned aromatic polysulfone, organic solvent, colorant, lubricant, various surfactants, antioxidant, heat stabilizer, other various stabilizers, ultraviolet absorber, antistatic agent, and the like.

<<Resin other than aromatic polysulfone>>

Examples of the resin other than the aromatic polysulfone include polyamide, polyester, polyphenylene sulfide, polycarbonate, polyphenylene ether, aromatic polyketone, polyetherimide, phenolic resin, epoxy resin, polyimide resin and modified products thereof, and the like.

<<Organic solvent>>

Examples of the organic solvent include sulfoxides such as dimethyl sulfoxide; amides such as dimethylformamide, dimethylacetamide, and N-methyl-2-pyrrolidone; sulfones such as sulfolane (1,1-dioxothiolan), dimethylsulfone, diethylsulfone, diisopropylsulfone, and diphenylsulfone; 1,3-dimethyl-2-imidazolidinone, 1,3-diethyl-2-imidazolidinone, and the like.

The resin composition of the present embodiment contains the above-mentioned aromatic polysulfone, and thus is useful as a material for forming a separation film.

(Method for producing aromatic polysulfone)

A method for producing an aromatic polysulfone includes a step of reacting an aromatic polysulfone precursor having a halogen atom at a main chain terminal with a compound having FG to generate an aromatic polysulfone having FG at a main chain terminal.

One embodiment of the method for producing an aromatic polysulfone includes step (i) of preparing an aromatic polysulfone precursor having a halogen atom at a main chain terminal; and
step (ii) of reacting the aromatic polysulfone precursor having a halogen atom at the main chain terminal with a compound having FG to generate an aromatic polysulfone having FG at a main chain terminal.

Step (i):

The aromatic polysulfone precursor may be one synthesized by a method described below or may be a commercially available product.

Examples of the commercially available product of the aromatic polysulfone precursor include Sumika EXCEL (registered trademark) PES 3600P, 4800P, and 5900P (all are polyethersulfones, all manufactured by Sumitomo Chemical Co., Ltd.).

The number-average molecular weight of the aromatic polysulfone precursor is preferably 1,000 to 150,000, more preferably 8,000 to 130,000, and further more preferably 10,000 to 70,000.

The number-average molecular weight (Mn) means a value that can be obtained by gel permeation chromatography (GPC) analysis, and obtained in terms of standard polystyrene based on a calibration curve obtained by measuring the molecular weight of standard polystyrene.

<Method for producing aromatic polysulfone precursor>

The aromatic polysulfone precursor in the present embodiment can be produced by using a monomer of a dihalogeno aromatic sulfone compound and a dihydroxy aromatic compound, and subjecting the monomer to a polycondensation reaction in the presence of a base in an organic solvent.

<<Monomer>>

The dihalogeno aromatic sulfone compound is a compound having an aromatic ring, a sulfonyl group, and two halogen atoms bound to the aromatic ring in one molecule.

The dihydroxy aromatic compound is a compound having an aromatic ring and two hydroxy groups bound to the aromatic ring in one molecule.

The dihalogeno aromatic sulfone compound and the dihydroxy aromatic compound correspond to the repeating units constituting the aromatic polysulfone precursor.

When the aromatic polysulfone precursor in the present embodiment has a repeating unit including the structure represented by Formula (S-1), it is possible to produce the above-mentioned aromatic polysulfone precursor having a repeating unit including a structure represented by Formula (S-1) by using a compound represented by Formula (mx-1) as a dihalogeno aromatic sulfone compound and a compound represented by Formula (my-1) as a dihydroxy aromatic compound.

$$X^1\text{-ph}^1\text{-SO}_2\text{-ph}^2\text{-X}^2 \cdots \qquad \text{(mx-1)}$$

$$\text{HO-ph}^1\text{-SO}_2\text{-ph}^2\text{-OH} \cdots \qquad \text{(my-1)}$$

[In Formula (mx-1), $ph^1$ and $ph^2$ are each independently a phenylene group which may have a substituent. $X^1$ and

$X^2$ are each independently a halogen atom.
In formula (my-1), $ph^1$ and $ph^2$ are each independently a phenylene group which may have a substituent.]

In Formulae (mx-1) and (my-1), both of $ph^1$ and $ph^2$ are the same as $ph^1$ and $ph^2$ in the above-mentioned Formula (S-1).
In Formula (mx-1), $X^1$ and $X^2$ are each independently a halogen atom. Examples of the halogen atom include a fluorine atom, a chlorine atom, a bromine atom, and an iodine atom, and a chlorine atom is preferable.
Examples of the compound represented by Formula (mx-1) include bis(4-chlorophenyl)sulfone, 4-chlorophenyl-3',4'-dichlorophenylsulfone, and the like.
Examples of the compound represented by Formula (my-1) include bis(4-hydroxyphenyl)sulfone, bis(4-hydroxy-3,5-dimethylphenyl)sulfone, bis(4-hydroxy-3-phenylphenyl)sulfone, and the like.
When the aromatic polysulfone precursor in the present embodiment has a repeating unit including a structure represented by the above-mentioned Formula (S-1) and a structure represented by the above-mentioned Formula (S-2), it is possible to produce an aromatic polysulfone precursor having a repeating unit including a structure represented by the above-mentioned Formula (S-1) and a structure represented by the above-mentioned Formula (S-2) by using a compound represented by Formula (mx-1) as a dihalogeno aromatic sulfone compound and a compound represented by Formula (my-2) as an aromatic dihydroxy compound.

$HO\text{-}ph^3\text{-}R\text{-}ph^4\text{-}OH$ ... (my-2)

[In Formula (my-2), $ph^3$ and $ph^4$ are each independently a phenylene group which may have a substituent. R represents an alkylidene group, an oxygen atom, or a sulfur atom.]
In Formula (my-2), all of $ph^3$, $ph^4$, and R are the same as $ph^3$, $ph^4$, and R in the above-mentioned Formula (S-2).
Examples of the compound represented by Formula (my-2) include bisphenol A: (2,2-bis(4-hydroxyphenyl)propane, bisphenol AF: 2,2-bis(4-hydroxyphenyl)hexafluoropropane, bis(4-hydroxyphenyl)sulfide, bis(4-hydroxy-3-methylphenyl)sulfide, bis(4-hydroxyphenyl)ether, and the like.
When the aromatic polysulfone precursor in the present embodiment has a repeating unit including a structure represented by the above-mentioned Formula (S-1) and a structure represented by the above-mentioned Formula (S-3), it is possible to produce an aromatic polysulfone precursor having a repeating unit including a structure represented by the above-mentioned Formula (S-1) and a structure represented by the above-mentioned Formula (S-3) by using a compound represented by Formula (mx-1) as a dihalogeno aromatic sulfone compound and a compound represented by Formula (my-3) as a dihydroxy aromatic compound.

$HO\text{-}(ph^5)_n\text{-}OH$ ··· (my-3)

[In Formula (my-3), $ph^5$ is a phenylene group which may have a substituent. n represents an integer of 1 to 3. When n is 2 or more, a plurality of $ph^5$'s may be the same or different.
In Formula (my-3), both of $ph^5$ and n are the same as $ph^5$ and n in the above-mentioned Formula (S-3).
Examples of the compound represented by Formula (my-3) include hydroquinone, resorcin, catechol, phenylhydroquinone, 4,4'-dihydroxybiphenyl, 2,2'-dihydroxybiphenyl, 3,5,3',5'-tetramethyl-4,4'-dihydroxybiphenyl, 2,2'-diphenyl-4,4'-dihydroxybiphenyl, 4,4'''-dihydroxy-p-quaterphenyl, and the like.
In the present embodiment, depending on the type of the desired aromatic polysulfone, both of the dihalogeno aromatic sulfone compound and the dihydroxy aromatic compound may be used alone, or two or more types thereof may be used in combination.

«Base and organic solvent»

The polycondensation of the dihalogeno aromatic sulfone compound and the dihydroxy aromatic compound is preferably performed using an alkali metal salt of carbonic acid as a base. In addition, the polycondensation is preferably performed in an organic solvent. The polycondensation is more preferably performed in an organic solvent using an alkali metal salt of carbonic acid as a base.
The alkali metal salt of carbonic acid may be an alkali carbonate (carbonate of an alkali metal), may be an alkali bicarbonate (hydrogen alkali carbonate, hydrogen carbonate of an alkali metal), or a mixture thereof.
Examples of the alkali carbonate include sodium carbonate, potassium carbonate, and the like.
Examples of the alkali bicarbonate include sodium bicarbonate (sodium hydrogen carbonate), potassium bicarbonate (potassium hydrogen carbonate), and the like.
The organic solvent is preferably an aprotic polar solvent.
The heating point of the organic solvent is preferably 100°C or higher and 400°C or lower, and more preferably

100°C or higher and 350°C or lower.

Examples of such an organic solvent include sulfoxides such as dimethyl sulfoxide; amides such as N,N-dimethylformamide, N, N-dimethylacetamide, and N-methyl-2-pyrrolidone; sulfones such as sulfolane(1,1-dioxothiolan), dimethylsulfone, diethylsulfone, diisopropylsulfone, and diphenylsulfone; 1,3-dimethyl-2-imidazolidinone, 1,3-diethyl-2-imidazolidinone, and the like.

The organic solvent may be used alone, or two or more types may be used in combination.

The reaction temperature of the polycondensation is preferably 180°C or higher and 400°C or lower, and the reaction time is preferably 4 to 10 hours.

Step (ii)

<Compound having FG>

The compound having FG (hereinafter, "also referred to as a "terminal capping agent") is not particularly limited as long as it is a compound capable of substituting a halogen atom at a main chain terminal of the aromatic polysulfone precursor with FG.

Examples of the terminal capping agent include 4-hydroxybenzoic acid and an alkali metal salt thereof, 4-hydroxybenzenesulfonic acid and an alkali metal salt thereof, 3-hydroxybenzenesulfonic acid and an alkali metal salt thereof, 4-hydroxybenzenesulphinic acid and an alkali metal salt thereof, 3-hydroxybenzenesulphinic acid and an alkali metal salt thereof, (4-hydroxyphenyl)phosphonic acid and an alkali metal salt thereof, (3-hydroxyphenyl)phosphonic acid and an alkali metal salt thereof, and the like.

Step (ii) may be performed in the presence of a base in an organic solvent, and examples of the organic solvent and bases include the same as those for the organic solvent and bases described in the above-mentioned method for producing an aromatic polysulfone precursor.

The reaction temperature at which the aromatic polysulfone precursor is reacted with the terminal capping agent is preferably 100°C to 300°C or lower, and the reaction time is preferably 4 to 15 hours.

The use amount of the terminal capping agent used in step (ii) is preferably 0.1 to 50 parts by mass, and more preferably 0.6 to 25 parts by mass, with respect to 100 parts by mass of the aromatic polysulfone precursor.

The use amount of the base in step (ii) is preferably 0.3 to 30 parts by mass, and more preferably 0.4 to 10 parts by mass, with respect to 100 parts by mass of the aromatic polysulfone precursor.

Examples

Hereinafter, the present invention will be described in more detail with reference to specific examples. However, the present invention is not limited to the examples shown below.

<Production of aromatic polysulfone having FG at main chain terminal>

[Example 1]

In a polymerization tank equipped with a stirrer, a nitrogen introduction tube, a thermometer, and a condenser with a receiver attached to the tip, 1.7 g of sodium 4-hydroxybenzenesulfonate (manufactured by Tokyo Chemical Industry Co., Ltd.), 0.92 g of potassium carbonate, and 150 g of N-methyl-2-pyrrolidone (hereinafter, abbreviated as NMP) were mixed, the temperature was raised to 100°C, and then 100 g of polyethersulfone (Sumika EXCEL PES 3600P, manufactured by Sumitomo Chemical Co., Ltd.) was added thereto. After the polyethersulfone was dissolved, heating was performed to 200°C to cause reaction for 14 hours. Subsequently, the obtained reaction mixture solution was diluted with NMP, cooled to room temperature, and unreacted potassium carbonate and by-produced potassium chloride were precipitated. The above-mentioned solution was added dropwise in water, aromatic polysulfone was precipitated, and unnecessary NMP by filtration was removed to obtain a precipitate.

The obtained precipitate was washed repeatedly with methanol and water, and heated and dried at 150°C to obtain the aromatic polysulfone of Example 1 having FG at the main chain terminal. The FG in the present example is a salt-type sulfonic acid group (hereinafter, referred to as FGS) containing a sodium sulfonate group and a potassium sulfonate group.

[Example 2]

An aromatic polysulfone of Example 2 having FGS at a main chain terminal was obtained in the same method as Example 1, except that the blending amount of sodium 4-hydroxybenzenesulfonate was changed to 0.92 g, the

blending amount of potassium carbonate was changed to 0.54 g, and polyethersulfone (Sumika EXCEL PES 4800P, manufactured by Sumitomo Chemical Co., Ltd.) having a different molecular weight was used.

[Example 3]

An aromatic polysulfone of Example 3 having FGS at a main chain terminal was obtained in the same method as Example 1, except that the blending amount of sodium 4-hydroxybenzenesulfonate was changed to 0.54 g, the blending amount of potassium carbonate was changed to 0.46 g, and polyethersulfone (Sumika EXCEL PES 5900P, manufactured by Sumitomo Chemical Co., Ltd.) having a different molecular weight was used.

[Example 4]

An aromatic polysulfone of Example 4 having FGS at a main chain terminal was obtained in the same method as Example 1, except that the blending amount of sodium 4-hydroxybenzenesulfonate was changed to 0.27 g, the blending amount of potassium carbonate was changed to 0.46 g, and polyethersulfone (Sumika EXCEL PES 5900P, manufactured by Sumitomo Chemical Co., Ltd.) having a different molecular weight was used.

[Example 5]

An aromatic polysulfone of Example 5 having FGS at a main chain terminal was obtained in the same method as Example 1, except that the blending amount of sodium 4-hydroxybenzenesulfonate was changed to 8.1 g, the blending amount of potassium carbonate was changed to 3.6 g, and 5.5 g of 4,4'-dichlorodiphenyl sulfone was mixed.

[Example 6]

An aromatic polysulfone of Example 6 having FGS at a main chain terminal was obtained in the same method as Example 1, except that the blending amount of sodium 4-hydroxybenzenesulfonate was changed to 5.4 g, the blending amount of potassium carbonate was changed to 2.4 g, and 3.0 g of 4,4'-dichlorodiphenyl sulfone was mixed.

[Example 7]

An aromatic polysulfone of Example 7 was obtained by mixing 10 parts by mass of the aromatic polysulfone of Example 5 with 90 parts by mass of polyethersulfone (Sumika EXCEL PES 5900P, manufactured by Sumitomo Chemical Co., Ltd.) aromatic polysulfone.

[Example 8]

An aromatic polysulfone of Example 8 was obtained by mixing 30 parts by mass of the aromatic polysulfone of Example 6 with 70 parts by mass of polyethersulfone (Sumika EXCEL PES 5900P, manufactured by Sumitomo Chemical Co., Ltd.) aromatic polysulfone.

[Example 9]

An aromatic polysulfone of Example 9 was obtained by mixing 50 parts by mass of the aromatic polysulfone of Example 6 with 50 parts by mass of polyethersulfone (Sumika EXCEL PES 5900P, manufactured by Sumitomo Chemical Co., Ltd.) aromatic polysulfone.

[Example 10]

An aromatic polysulfone of Example 10 was obtained by mixing 50 parts by mass of the aromatic polysulfone of Example 5 with 50 parts by mass of polyethersulfone (Sumika EXCEL PES 5900P, manufactured by Sumitomo Chemical Co., Ltd.) aromatic polysulfone.

[Comparative Example 1]

An aromatic polysulfone of Comparative Example 1 in which a part of a specific repeating unit was randomly sulfonated was obtained by the same method as Comparative Example 1 of JP 2013-215640 A.

[Comparative Example 2]

An aromatic polysulfone of Comparative Example 2 was obtained by mixing 20 parts by mass of the aromatic polysulfone of Comparative Example 1 with 80 parts by mass of polyethersulfone (Sumika EXCEL PES 5900P, manufactured by Sumitomo Chemical Co., Ltd.) aromatic polysulfone.

[Comparative Example 3]

As the aromatic polysulfone of Comparative Example 3, polyethersulfone (Sumika EXCEL PES 5900P, manufactured by Sumitomo Chemical Co., Ltd.) was prepared.

<Measurement of FG amount>

[Solution measurement $^1$H-NMR]

In the solution measurement, $^1$H-NMR for calculating the FG amount per 100 units of repeating units forming the main chain of the aromatic polysulfone of each example, a sample in which an aromatic polysulfone of each example was dissolved in heavy dimethyl sulfoxide was used so that the concentration of the aromatic polysulfone of each example was 80 mg/mL. The measurement conditions were as follows.

Measuring device: ECZ400S (manufactured by JEOL)
Static magnetic field strength: 9.4 Tesla (resonance frequency: 400 MHz ($^1$H))
Spinning: 15 Hz
(Repeat time: 7.2 s)
Number of times of integration: 64 times
Temperature: Room temperature
Chemical shift standard substance: Dimethyl sulfoxide

[Calculation of FG amount at main chain terminal per 100 units of repeating units forming main chain of aromatic polysulfone]

The FG amount ($A^{01}$) at a main chain terminal of an aromatic polysulfone of each example per 100 units forming main chain of repeating units of the aromatic polysulfone of each example was calculated by NMR measurement. Specifically, in the measurement by $^1$H-NMR, in ($-ph^1-SO_2-ph^2-O-$) of the main chain of the aromatic polysulfone, using a peak area ($Xp^{01}$) assigned to (a total of four hydrogen atoms) two hydrogen atoms bound to both of two carbon atoms adjacent to a carbon atom of $ph^1$ bound to S and two hydrogen atoms bound to both of two carbon atoms adjacent to a carbon atom of $ph^2$ bound to S and a peak area ($Yp^{01}$) assigned to two hydrogen atoms bound to both of two carbon atoms adjacent to a carbon atom to which FG binds in an aromatic ring of the main chain terminal of the aromatic polysulfone, calculation was performed based on Formula (a1).

$$A^{01} = (Yp^{01}/2)/(Xp^{01}/4) \times 100$$

$$= Yp^{01}/Xp^{01} \times 200 \ldots \text{(a1)}$$

As an $Xp^{01}$, an integrated value of 7.25 to 7.27 ppm was adopted. In addition, as a $Yp^{01}$, an integrated value of 7.02 to 7.04 ppm was adopted.

[Calculation of FG amount at main chain per 100 units of repeating units forming main chain of aromatic polysulfone]

The FG amount ($A^{02}$) at a main chain of the aromatic polysulfone of each example per 100 units of repeating units forming the main chain of the aromatic polysulfone of each example was calculated by the following formula.

Specifically, in the measurement of $^1$H-NMR, in ($-ph^1-SO_2-ph^2-O-$) of the main chain of the aromatic polysulfone, using a peak area ($Xp^{02}$) assigned to (a total of four hydrogen atoms) two hydrogen atoms bound to both of two carbon atoms adjacent to a carbon atom of $ph^1$ bound to S and two hydrogen atoms bound to both of two carbon atoms adjacent to a carbon atom of $ph^2$ bound to S and a peak area ($Cp^{02}$) assigned to one hydrogen atom bound to one carbon atom adjacent to a carbon atom of $ph^1$ or $ph^2$ to which FG of the main chain of the aromatic polysulfone binds, calculation was performed based on Formula (a2).

$$A^{02} = Cp^{02}/\{(Xp^{02}/4) + Cp^{02}\} \times 100 \ldots (a2)$$

As $Xp^{U2}$, an integrated value of 7.9 to 8.05 ppm was adopted. In addition, as $Cp^{02}$, an integrated value of 8.2 to 8.35 ppm was adopted.

The FG amount at the main chain terminal of the aromatic polysulfones of Examples 1 to 10 and the FG amount at the main chain of the aromatic polysulfones of Comparative Examples 1 and 2 are shown in Table 1.

An "-" value in the FG amount in Table 1 means that the value was below a detection limit.

In addition, the blending amount of sodium 4-hydroxybenzenesulfonate is also shown in Table 1.

[Table 1]

| | Blending amount of sodium 4-hydroxybenzenesulfonate (g) | FG amount per 100 units of repeating units | |
|---|---|---|---|
| | | In main chain | Main chain terminal |
| Example 1 | 1.7 | - | 1.46 |
| Example 2 | 0.92 | - | 0.98 |
| Example 3 | 0.54 | - | 0.60 |
| Example 4 | 0.27 | - | 0.52 |
| Example 5 | 8.1 | - | 6.48 |
| Example 6 | 5.4 | - | 5.53 |
| Example 7 | - | - | 0.75 |
| Example 8 | - | - | 1.72 |
| Example 9 | - | - | 234 |
| Example 10 | - | - | 2.78 |
| Comparative Example 1 | - | 4.57 | - |
| Comparative Example 2 | - | 0.91 | - |
| Comparative Example 3 | - | - | - |

<Production of porous film>

By mixing 18% by mass of any of the aromatic polysulfones of the above-mentioned Examples 1 to 4 and 7 to 9 or aromatic polysulfones of Comparative Examples 2 and 3 and 82% by mass of NMP with each other in a heating container, and stirring at 80°C for 2 hours, pale yellow solutions were obtained. By applying each of the solutions on the surface of a 3 mm-thick glass plate using a film applicator, and then immersing, porous films having a film thickness of 140 to 170, formed of aromatic polysulfones of Examples 1 to 4 and 7 to 9 or aromatic polysulfones of Comparative Examples 2 and 3, were formed.

The porous film of each example was peeled off the glass plate, washed a plurality of times with water, and then the film was stored in water until the start of measurement.

[Measurement of water permeating rate]

Using a pressure cell having a diameter of 47 mm, the porous film of each example was cut into a circular shape so as to be mounted on the pressure cell, and a test film of each example was produced. A test film of each example was mounted in the pressure cell, pure water was filtered through the test film of each example at 23°C at a pressure of 0.2 bar (20 kPa), and the amount of pure water that permeated through the test film of each example was measured over a period (30 seconds) from an elapsed time of 9 minutes 30 seconds to an elapsed time of 10 minutes

from the filtration start to obtain a water permeating rate ($L/m^2/h/10^5Pa$). The results are shown in Table 2.

[Evaluation of fouling resistance]

By the same method as [Measurement of water permeating rate] described above, the amount of pure water that permeated through each test film of each example over a period from an elapsed time of 9 minutes 30 seconds to an elapsed time of 10 minutes from the filtration start (30 seconds) was measured to obtain a water permeating rate (Ju). Subsequently, using the test film of each example, each bovine serum albumin aqueous solution (100 ppm) was filtered at the same pressure for 1 hour. After that, the test film of each example was turned inside out, and pure water was filtered at 23°C at a pressure of 0.1 bar (10 kPa) for 2 minutes, and washing of the film was performed. The test film of each example was turned inside out again, pure water was filtered at 23°C at a pressure of 0.2 bar (20 kPa), and the amount of pure water that permeated through each test film of each example over a period from an elapsed time of 9 minutes 30 seconds to an elapsed time of 10 minutes from the filtration start (30 seconds) was measured to obtain a water permeating rate (J).

The recovery rate (%) of the water permeating rate (%) of the test film of each example was calculated from the obtained water permeating rate ($J_0$) and the water permeating rate (J) by the following formula. The results are shown in Table 2.

This means that the higher the recovery rate of the water permeating rate, the higher the fouling resistance.

$$\text{Recovery rate of water permeating rate (\%)} = (J/J_0) \times 100$$

$J_0$: Water permeating rate before bovine serum albumin filtration ($L/m^2/h/10^5$ Pa)
J: Water permeating rate after bovine serum albumin filtration ($L/m^2/h/10^5$ Pa)

[Table 2]

| | Aromatic polysulfone | Water permeating amount ($L/m^2/h/10^5Pa$) | Recovery rate of water permeating rate (%) |
|---|---|---|---|
| Porous film | Example 1 | 2720 | 45 |
| | Example 2 | 2330 | 38 |
| | Example 3 | 1985 | 24 |
| | Example 4 | 1932 | 25 |
| | Example 7 | 2365 | 38 |
| | Example 8 | 3498 | 45 |
| | Example 9 | 3709 | 47 |
| | Example 10 | 4397 | 45 |
| | Comparative Example 2 | 1332 | 30 |
| | Comparative Example 3 | 1568 | 25 |

As shown in Table 2, it was confirmed that the porous film formed using the aromatic polysulfone of Examples had a larger amount of water permeation and had excellent water permeability compared with a porous film formed using the aromatic polysulfone of a comparative example.

It was confirmed that, among the aromatic polysulfones of Examples, the porous film formed using the aromatic polysulfones of Examples 1, 2, and 7 to 9, in which the FG amount at the main chain terminal was large, had a higher recovery rate of the water permeating rate and had excellent fouling resistance.

In addition, it was confirmed that a porous film formed by using the aromatic polysulfones of Examples 7 to 9, which were mixed resins of an aromatic polysulfone having FG at the main chain terminal and an aromatic polysulfone not having FG at the main chain terminal had better water permeability compared with other examples.

<Production of cast film>

By mixing 18% by mass of any of the aromatic polysulfones of the above-mentioned Examples 1 to 4 and 7 to 9 or aromatic polysulfones of Comparative Examples 2 and 3 and 82% by mass of NMP with each other in a heating container, and stirring at 80°C for 2 hours, pale yellow solutions were obtained. By applying each of the solutions on the surface of a 3 mm-thick glass plate using a film applicator, and then drying the solution at 60°C using a high-temperature hot-air dryer, each coating film was formed. By subjecting each coating film to heat treatment at 250°C while flowing nitrogen, each of 30 μm-thick films was formed on a glass plate. By peeling these films off the glass plate, all of the films consisting of the aromatic polysulfones of Examples 1 to 4 and 7 to 9, or the aromatic polysulfones of Comparative Examples 2 and 3 were obtained.

[Measurement of film tensile strength]

A tensile strength of each film of each example was measured in accordance with JIS K7127.

Specifically, first, a 30 μm-thick film of each example was punched out to obtain a dumbbell-shaped type 3 test piece specified in JIS K6251. Subsequently, using a test piece of each example, each of tensile strengths (value obtained by dividing a tensile load value by a cross-sectional area of the test piece) when the test piece was pulled at a grip interval of 50 mm and a tensile speed of 5 mm/min, and cut (broken) at 23°C in an atmosphere of humidity 50%RH was measured with Autograph. The results are shown in Table 3.

[Table 3]

| | Aromatic polysulfone | Film tensile strength (MPa) |
|---|---|---|
| Film | Example 1 | 103 |
| | Example 2 | 102 |
| | Example 3 | 104 |
| | Example 4 | 104 |
| | Example 7 | 94 |
| | Example 8 | 97 |
| | Example 9 | 95 |
| | Comparative Example 2 | 88 |
| | Comparative Example 3 | 88 |

As shown in Table 3, it was confirmed that the film formed using the aromatic polysulfone of Examples had a higher film tensile strength and had better mechanical strength than the film formed using the aromatic polysulfone of Comparative Examples.

Hereinabove ,although preferable examples of the present invention have been described, the present invention is not limited to these examples. Within a range not departing from the gist of the present invention, addition, omission, substitution, and other changes to the configuration are possible. Accordingly, the present invention is not to be considered as being limited by the foregoing description and is only limited by the scope of the appended claims.

## Claims

1. An aromatic polysulfone having, at a main chain terminal, one or more functional groups selected from the group consisting of an acidic group having a pKa equal to or smaller than a pKa of a carboxy group and a salt of the acidic group at a main chain terminal,
wherein the amount of the functional group, calculated from a peak area ratio in $^1$H-NMR, is 0.35 to 40 per 100 units of repeating units forming the main chain of the aromatic polysulfone.

2. The aromatic polysulfone according to Claim 1,
wherein the aromatic polysulfone has a repeating unit including a structure represented by General Formula (S-1) and a terminal unit represented by General Formula (Se-1),

$$-ph^1-SO_2-ph^2-O- \ldots \quad (S\text{-}1)$$

$$-ph^1-SO_2-ph^2-O-Ar-Ra \ldots \quad (Se\text{-}1)$$

[in the formulae, $ph^1$ and $ph^2$ are each independently a phenylene group which may have a substituent,
Ar is an aromatic hydrocarbon group which may have a substituent, and
Ra is one or more functional groups selected from the group consisting of an acidic group having a pKa equal to or smaller than a pKa of a carboxy group and a salt of the acidic group].

**3.** The aromatic polysulfone according to Claim 1 or 2,
wherein the amount of the functional group is 0.7 to 40 per 100 units of the repeating unit.

**4.** The aromatic polysulfone according to any one of Claims 1 to 3,
wherein the aromatic polysulfone is a mixed resin of an aromatic polysulfone having the functional group at the main chain terminal and an aromatic polysulfone not having the functional group at a main chain terminal.

**5.** A resin composition comprising:

the aromatic polysulfone according to any one of Claims 1 to 4; and
a filler.

**6.** A method for producing the aromatic polysulfone according to any one of Claims 1 to 3, comprising:
a step of reacting an aromatic polysulfone precursor having a halogen atom at a main chain terminal with a compound having the functional group to generate the aromatic polysulfone having the functional group at the main chain terminal.

## INTERNATIONAL SEARCH REPORT

International application No.
**PCT/JP2021/046908**

**A. CLASSIFICATION OF SUBJECT MATTER**

***C08G 75/23***(2006.01)i; ***B01D 71/68***(2006.01)i; ***B01D 71/82***(2006.01)i; ***C08G 65/48***(2006.01)i; ***C08L 81/06***(2006.01)i
FI: C08G75/23; C08L81/06; C08G65/48; B01D71/68; B01D71/82 500

According to International Patent Classification (IPC) or to both national classification and IPC

**B. FIELDS SEARCHED**

Minimum documentation searched (classification system followed by classification symbols)

C08G65/00-67/04;C08G75/00-75/32;C02F1/44-1/44;C08K3/00-13/08;C08L1/00-101/14;B01D53/22; B01D61/00-71/82

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2017-226804 A (SUMITOMO CHEMICAL CO) 28 December 2017 (2017-12-28) claims, paragraphs [0031], [0076]-[0077], [0082], examples | 1-6 |
| A | JP 2013-189546 A (TOYO INK SC HOLDINGS CO LTD) 26 September 2013 (2013-09-26) entire text | 1-6 |
| A | JP 2011-094110 A (SUMITOMO CHEMICAL CO) 12 May 2011 (2011-05-12) entire text | 1-6 |
| A | JP 2018-168315 A (SUMITOMO CHEMICAL CO) 01 November 2018 (2018-11-01) entire text | 1-6 |
| A | JP 2019-019219 A (SUMITOMO CHEMICAL CO) 07 February 2019 (2019-02-07) entire text | 1-6 |
| A | JP 2013-215640 A (DAICEN MEMBRANE SYSTEMS LTD) 24 October 2013 (2013-10-24) entire text | 1-6 |
| A | JP 2003-012795 A (TOYO BOSEKI) 15 January 2003 (2003-01-15) entire text | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/046908**

**C. DOCUMENTS CONSIDERED TO BE RELEVANT**

| Category* | Citation of document, with indication, where appropriate, of the relevant passages | Relevant to claim No. |
|---|---|---|
| A | JP 2003-292609 A (MITSUI CHEMICALS INC) 15 October 2003 (2003-10-15) entire text | 1-6 |
| A | JP 2006-291046 A (UNIV OF TOKYO) 26 October 2006 (2006-10-26) entire text | 1-6 |

Form PCT/ISA/210 (second sheet) (January 2015)

**INTERNATIONAL SEARCH REPORT**
**Information on patent family members**

International application No.
**PCT/JP2021/046908**

| Patent document cited in search report | Publication date (day/month/year) | Patent family member(s) | Publication date (day/month/year) |
|---|---|---|---|
| JP 2017-226804 A | 28 December 2017 | US 2019/0185626 A1<br>claims, paragraphs [0062], [0132]-[0133], [0140], examples<br>WO 2017/221966 A1<br>EP 3476883 A1<br>CN 109312068 A<br>KR 10-2019-0022531 A | |
| JP 2013-189546 A | 26 September 2013 | (Family: none) | |
| JP 2011-094110 A | 12 May 2011 | US 2012/0152823 A1<br>entire text<br>WO 2011/040228 A1<br>CN 102510772 A | |
| JP 2018-168315 A | 01 November 2018 | US 2020/0024451 A1<br>entire text<br>WO 2018/181259 A1<br>EP 3604387 A1<br>CN 110506067 A<br>KR 10-2019-0127761 A | |
| JP 2019-019219 A | 07 February 2019 | US 2020/0207984 A1<br>entire text<br>WO 2019/017383 A1<br>EP 3656819 A1<br>CN 110914366 A | |
| JP 2013-215640 A | 24 October 2013 | (Family: none) | |
| JP 2003-012795 A | 15 January 2003 | (Family: none) | |
| JP 2003-292609 A | 15 October 2003 | (Family: none) | |
| JP 2006-291046 A | 26 October 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020213943 A
- JP 2013215640 A